(19) **Europäisches Patentamt**

**European Patent Office**

**Office européen des brevets**

(11) **EP 1 236 928 B1**

(12) **EUROPEAN PATENT SPECIFICATION**

(45) Date of publication and mention
of the grant of the patent:
**13.04.2005   Bulletin 2005/15**

(51) Int Cl.⁷: **F16G 5/16**

(21) Application number: **02002967.4**

(22) Date of filing: **11.02.2002**

(54) **Drive belt and method for manufacturing thereof**

Treibriemen und sein Herstellungsverfahren

Courroie de transmission et son procédé de fabrication

(84) Designated Contracting States:
**AT BE CH CY DE DK ES FI FR GB GR IE IT LI LU
MC NL PT SE TR**

(30) Priority: **28.02.2001   JP 2001055499**

(43) Date of publication of application:
**04.09.2002   Bulletin 2002/36**

(73) Proprietor: **TOYOTA JIDOSHA KABUSHIKI
KAISHA
Toyota-shi, Aichi-ken 471-8571 (JP)**

(72) Inventors:
 • **Kobayashi, Daisuke
   Toyota-shi, Aichi-ken, 471-8571 (JP)**
 • **Azuma, Hitoshi
   Toyota-shi, Aichi-ken, 471-8571 (JP)**
 • **Kojima, Kazuhito
   Toyota-shi, Aichi-ken, 471-8571 (JP)**
 • **Nishigaya, Masabumi
   Toyota-shi, Aichi-ken, 471-8571 (JP)**
 • **Hamajima, Tetsuo
   Toyota-shi, Aichi-ken, 471-8571 (JP)**
 • **Ito, Satoshi
   Toyota-shi, Aichi-ken, 471-8571 (JP)**
 • **Baba, Shinichi
   Toyota-shi, Aichi-ken, 471-8571 (JP)**
 • **Yuasa, Kei
   Toyota-shi, Aichi-ken, 471-8571 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(56) References cited:
**EP-A- 1 013 964          US-A- 5 152 722**

# Description

Technical Field

This invention relates to a drive belt, in which a number of plate members called "blocks" or "elements" are arranged in an annular shape to confront each other and bound in an annular shape by a metal band called "hoop", and a method for manufacturing the drive belt.

Background of the Related Art

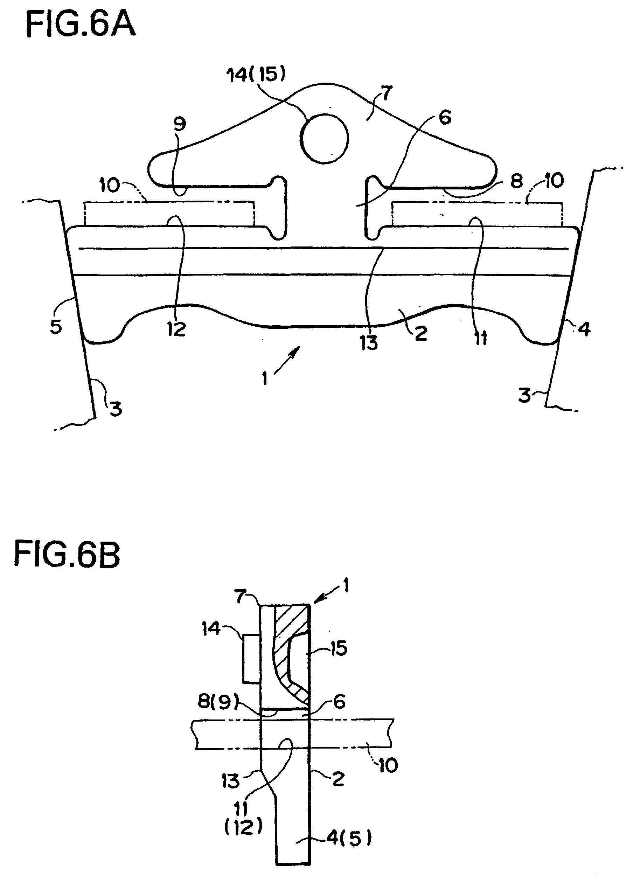

In the prior art, the drive belt of this kind is employed in a continuously variable transmission (CVT). One example of the drive belt will be described in the following. Figs. 6A and 6B show a plate member (as will be called the "block") 1 to be employed in the drive belt. The shown block 1 includes a body portion 2 having two right and left side faces inclined to form taper faces. These two inclined taper side faces provide frictional faces 4 and 5 to frictionally contact with the belt winding grooves of a pulley 3 thereby to transmit a torque.

At the widthwise central portion of the body portion 2, there is formed a neck portion 6 which extends upward of the drawing. With the upper end portion of the neck portion 6, there is integrally formed a crest portion 7 which extends in a mushroom shape on the two widthwise sides of the body portion 2. Between the upper edge portions of the body portion 2 and the lower edge portions of the crest portion 7, therefore, there are formed slit portions 8 and 9 which are opened rightward and leftward. These slit portions 8 and 9 are provided for winding hoops 10 or metal bands for binding the blocks 1 which are annularly arrayed in dose contact with each other, in an annular shape. Therefore, the edge portions of the body portion 2 on the upper side provide saddle faces 11 and 12 for contacting with the hoops 10.

These blocks 1 are bound in the annularly arrayed state by the hoops 10 and are wound on the individual pulleys 3 on the drive side and on the driven side. While being wound on the pulleys 3, therefore, the individual blocks 1 have to be spread in sector shapes with respect to the center of the pulley 3 and to contact closely with each other. For these necessities, therefore, the individual blocks 1 are thinned at their lower portions (at the central portions in the annularly arrayed state). Specifically, the portions lower than the portions, as lowered by a predetermined size from the saddle faces 11 and 12, on one side face (e.g., on the lefthand side face of Fig. 6B) of the body portion 2 are cut thin. In case the individual blocks 1 are spread in a sector shape to contact with each other, therefore, they contact at their boundary portions in which the thickness changes. Moreover, these boundary portions provide rocking edges 13.

On the individual blocks 1, moreover, there are formed a projection 14 and a recess 15 for determining their relative positions. On the extension of the neck portion 6 (or at the central portion of the crest portion 7), more specifically, there is formed a dimple 14 having a circular section on one side face (i.e., on the face side of the rocking edge 13 in the shown example) and being a projection later. On the side face opposite to that of the dimple 14, there is formed a bottomed cylindrical hole 15 for fitting (or receiving) the dimple 14 of the adjoining block 1 loosely. By fitting these dimple 14 and hole 15, therefore, the blocks 1 are positioned relative to each other in a horizontal direction (or an X-direction) and in a vertical direction (or a Y-direction).

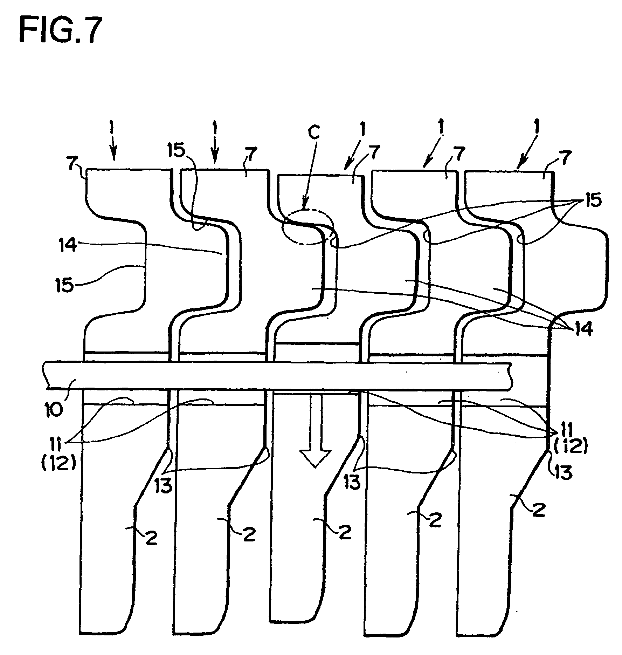

In Fig. 7, there is shown a portion of the drive belt in which the blocks 1 are annularly arrayed and bound by the hoops 10. The shown portion has the short neck portion 6 of any block 1. In the hole 15 of this block 1, there is fitted the dimple 14 of the adjoining block 1, and this dimple 14 is held in close contact in the vertical direction, or the Y-direction (e.g., a portion C of Fig. 7). In other words, the blocks 1 adjoining each other are made to interfere with each other by their dimple 14 and hole 15 so that the block 1 having the shorter neck portion 6 is pulled up. On the other hand, the hoops 10 are linearly extended by the tension so that they are brought into close contact with the saddle faces 11 and 12 of the pulled-up block 1 thereby to establish a load to pull down the same block 1.

As a result, the block 1 having the shorter neck portion 6 is subjected to the load to pull the neck portion 6 vertically. This is the state in which a bending moment is acting upon the portions, as extending from the root portion of the neck portion 6, of the body portion 2. This bending moment takes its maximum at the boundary portion between the neck portion 6 and the body portion 2 and may cause a fatigue failure at the boundary portion. In the prior art, therefore, the positioning precision of the dimple 14 and the hole 15 and their mutual clearance are administered with respect to the saddle faces 11 and 12.

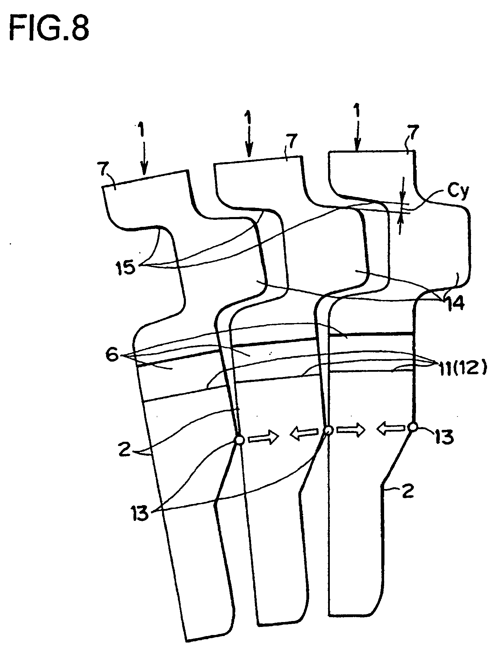

Moreover, Fig. 8 shows the state in which the drive belt is wound on the pulleys so that the individual blocks 1 are spread in the sector shape. The individual blocks 1 keep the contacting state at their rocking edges 13 so that their individual spacings are enlarged on the upper side (or on the outer side in the radial direction) of the rocking edge 13 and reduced on the lower side (or on the inner side of the radial direction). With the shapes and sizes of the individual blocks 1 being identical, moreover, the individual rocking edges 13 in the vertical direction (or the radial direction while the blocks 1 being wound on the pulleys) are substantially identically positioned so that each block 1 establishes a compressive force accompanying the transmission of the torque.

Thus, the drive belt having the numerous blocks 1 arrayed in the annular shape and bound by the hoops 10 is linearly arranged between the pulleys and is inclined to spread in the sector shape while being wound on the pulleys. While the drive belt is running, therefore, the individual blocks 1 are repeatedly inclined to cause vibrations and noises. In the invention disclosed in Japanese Patent Laid-Open No. 4-83940 (JPA4-83940, US-A-5 152 722), therefore, the drive belt is constructed by combining a plurality of kinds of blocks having different sizes from the saddle faces to the rocking edges. According to the invention disclosed, moreover, a specific frequency level, as caused by the repeated inclinations of the blocks, is suppressed to improve the acoustic vibration characteristics.

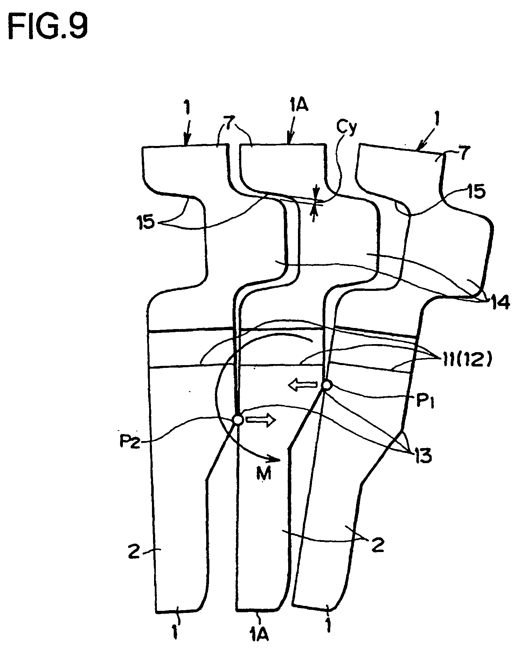

In case the drive belt is constructed by employing a plurality of blocks having different vertical (or in the Y-direction) positions of the rocking edges, as disclosed in the above-specified Laid-Open, a gap occurs at positions where the loads are applied to each other, if the blocks are wound on the pulleys and spread in the sector shape. This state is shown in Fig. 9.

In the shown example, there is mixed a block 1A which has a shorter size from the saddle faces 11 and 12 to the rocking edge 13. This block 1A contacts, when wound on the pulleys and spread in the sector shape, with the adjoining block 1 at its rocking edge 13, as indicated by a contact position P1. Moreover, the size from the saddle faces 11 and 12 to the rocking edge 13 in the block 1, as located on the opposite side (i.e., on the lefthand side of Fig. 9), is not set especially short so that the block 1 contacts with the block 1A at a point P2 (on the inner circumferential side when wound on the pulleys) lower than the foregoing point P1.

Therefore, the block 1A having the rocking edge 13 on the relatively upper side is subjected, at its two points P1 and P2 (which are dislocated in the vertical direction or the Y-direction), to the loads in the compressing directions. As a result, a moment M is caused on the basis of those loads so that the block 1A is inclined to let its crest portion 7 fall on the rear side (or the lefthand side of Fig. 9) in the example of Fig. 9. As a result, there is enlarged the fitting depth between the dimple 14 and the hole 15 of the largely inclined block 1A and the adjoining block 1. A clearance Cy between these dimple 14 and hole 15 is set to the value of the case in which they are fitted in the normal positions. In case the dimple 14 and the hole 15 are fitted with the aforementioned large inclination, therefore, they come into contact and further into positively meshing engagement. Accordingly, a load may occur in the vertical direction (or the Y-direction).

On the other hand, the individual blocks 1 and 1A are bound by the hoops so that they are regulated from moving in the vertical direction (or the Y-direction). If the vertical (or Y-direction) load is caused by the aforementioned meshing engagement between the dimple 14 and the hole 15, therefore, there is established a state similar to the aforementioned one shown in Fig. 8. If the size of the rocking edge 13 from the saddle faces 11 and 12 is largely different between the blocks 1 and 1A adjoining each other, more specifically, the so-called "hanging load" to pull the crest portion 7 or the neck portion 6 in the vertical direction (or in the Y-direction) may be increased to cause the high probability of the fatigue failure of the blocks 1 and 1A thereby to deteriorate the durability of the drive belt.

In order to eliminate this disadvantage, it is conceivable to enlarge the clearance in the vertical direction (or the Y-direction) between the dimple 14 and the hole 15. With the clearance between the dimple 14 and the hole 15 being thus enlarged, however, there drops the relative positioning precision of the blocks.

Summary of the Invention

This invention has been conceived in view of the technical problems thus far described and has an object to provide a drive belt, which can improve the durability without deteriorating the relative positioning precision of the blocks or equivalent plate members, and a method for manufacturing the drive belt.

In order to achieve this object, this invention is characterized by constructing a drive belt, in which a size difference of blocks adjoining each other from a predetermined reference position of a rocking edge and a clearance between a dimple and a hole or between a projection and a recess corresponding to the former are set to a predetermined relation.

According to an aspect of this invention, more specifically, there is provided a drive belt, in which an annular band-shaped member is wound on a multiplicity of plate members to be arrayed in an annular shape to confront each other, to bind the plate members in an annular shape, in which there is formed on one side face of each plate member in the array direction a rocking edge to contact with a plate member to adjoin the each plate member when the each plate member comes into an arcuately curved array state, in which a projection to project toward the adjoining plate member is formed on the each plate member at a predetermined position dislocated in the inner and outer circumferential direction of the band-shaped member with respect to the rocking edge, and in which a recess to fit the projection of the adjoining plate member is formed on the face opposite to the face having the projection. In the drive belt, the difference or ratio of the size of the rocking edge of each of the adjoining plate members from a predetermined reference position and a clearance, as taken in a direction to join the rocking edge and the projection or recess, between the projection and the recess of the adjoining plate members are set in a predetermined relation.

According to another aspect of this invention, moreover, there is provided a method for manufacturing a drive belt, in which an annular band-shaped member is wound on a multiplicity of plate members to be arrayed in an annular shape to confront each other, to bind the plate members in an annular shape, in which there is formed on one side face of each plate member in the array direction a rocking edge to contact with a plate member to adjoin the each plate member when the each plate member comes into an arcuately curved array state, in which a projection to project toward the adjoining plate member is formed on the each plate member at a predetermined position dislocated in the inner and outer circumferential direction of the band-shaped member with respect to the rocking edge, and in which a recess to fit the projection of the adjoining plate member is formed on the face opposite to the face having the projection. In the drive belt manufacturing method, the individual plate members are arrayed so that the difference or ratio of the size of the rocking edge of each of the adjoining plate members from a predetermined reference position and a clearance, as taken in a direction to join the rocking edge and the projection or recess, between the projection and the recess of the adjoining plate members may take a predetermined relation.

In this invention, therefore, the numerous plate members are arrayed in the annular shape to confront each other and are bound in the annularly arrayed state by annular band-shaped members. The individual plate members thus arrayed are positioned relative to each other such that a projection formed in each plate member is fitted in a recess of the adjoining plate member. At the portion in which the individual plate members are arrayed in an arcuately curved shape, moreover, the arcs of the individual plate members are narrower at their inner circumferential sides and wider at their outer circumferential sides so that the individual plate members contact with each other at the rocking edges. The difference or ratio of the size of the rocking edges from a predetermined reference position between the adjoining plate members and the clearance between the projection and the recess of the adjoining plate members are set to take a predetermined relation. This clearance is taken in the direction joining the rocking edge and the projection or the recess. The relation is exemplified by that in which the clearance is the larger for the larger difference of that size.

As a result, if the position of the rocking edge from the reference position is different between the adjoining plate members, according to this invention, the clearance between the projection and the recess is accordingly set. Even if the plate member may be inclined with respect to the adjoining plate member by the cause of the difference in the rocking edge positions, therefore, the projection and the recess in the adjoining plate members are prevented from contacting or meshing with each other to establish a high stress so that the drive belt is accordingly improved in its durability. In case no or little difference is between the positions of the rocking edges of the adjoining plate members, moreover, the clearance between the projection and the recess of the plate members can be reduced. Therefore, the positioning precision of the plate members is relatively improved, that is, the stability of the shape of the drive belt is improved.

The above and further objects and novel features of this invention will more fully appear from the following detailed description when the same is read with reference to the accompanying drawings. It is to be expressly understood, however, that the drawings are for the purpose of illustration only and are not intended as a definition of the limits of the invention.

Brief Description of the Drawings

Fig. 1 is a schematic diagram showing the state, in which plate members are inclined for the cause of a rocking edge distance difference.
Fig. 2 is a diagram illustrating one example of the relation between a rocking edge distance difference $\delta$ and a clearance Cy in this invention.
Fig. 3 is a perspective view schematically showing a portion of a drive belt according to this invention.
Fig. 4 is a perspective view showing the entire structure of the drive belt according to this invention.
Fig. 5 is a diagram plotting the results of measurements of the rocking edge distance difference $\delta$ and the clearance Cy of a V-shaped block at the initial time when the drive belt shown in Fig. 4 is assembled.
Fig. 6A is a front elevation of one example of a block for constructing the drive belt of this invention, and Fig. 6B is a partially broken side elevation of the block shown in Fig. 6A.
Fig. 7 is a diagram schematically showing the arrayed state of the blocks.
Fig. 8 is a diagram schematically showing the state in which the blocks are spread in a sector shape.
Fig. 9 is a schematic diagram for explaining the situation in which the blocks are inclined on the basis of the rocking edge distance difference.

Detailed Description of the Preferred Embodiments

This invention will be more specifically described. In short, the drive belt of this invention is a belt which is made to run on a pair of pulleys to transmit a motive power between the pulleys, and is employed merely as a drive belt in a power transmission or as a drive belt of a continuously variable transmission (CVT).
Moreover, the drive belt of this invention is given a structure in which a number of plate members are annularly arrayed to confront each other so that an annular band member is wound on those plate members to bind them. In this respect, the drive belt has the structure similar to that of the aforementioned drive belt of the prior art. Therefore, those plate members contact with the pulleys to transmit the torque inbetween. As a result, the drive belt is subjected to a force to push the plate members in the running direction so that the torque to be transmitted through the pulleys appears as the plate member pushing force. This is different from the ordinary winding transmission mechanism having a band-shaped belt wound directly on the pulleys, in which the torque to be transmitted appears as the tension of the belt.

The plate members transmit the torque between the pulleys and are therefore provided with frictional faces or transmissive faces to contact with the pulleys. These faces are exemplified by the frictional faces shown in Figs. 6A and 6B. Depending upon the shapes of the plate members, however, the transmissive faces may be different in shape and location from those frictional faces.

The band-shaped member for binding the plate members of this invention in the annular shape can be exemplified by the hoop of a laminar structure known in the prior art. In short, however, the band-shaped member may be any, if it can bind the plate members arrayed in the annular shape and has a strength to push the plate members to the pulleys to establish a contact pressure necessary for transmitting the torque, and is preferred to have a flexibility. Moreover, a single band-shaped member could bind the plate members. The plate members may be changed in shape in accordance with the number of band-shaped members employed. In the structure shown in Figs. 6A and 6B, specifically, saddle faces are provided on the two right and left portions because two hoops are employed. In case the single band-shaped member is employed, however, the plate members to be employed have saddle faces at the transversely central portions.

The plate members are pushed, while wound on the pulleys, onto the pulleys by the band-shaped members but are suspended between the pulleys by the band-shaped members. Therefore, the structure for connecting the plate members and the band-shaped members is generally exemplified by the structure in which the band-shaped members are damped on their surface and back side partially by the plate members. In the structure shown in Figs. 6A and 6B, therefore, there are formed slit portions 8 and 9. The structure of the portions in this invention for connecting the plate members and the band-shaped members should not be limited to the open structure like the slit portions but may be exemplified by a structure for enclosing the outer peripheries of the band-shaped members completely.

The plate members of the drive belt in this invention are provided with rocking edges. These rocking edges are portions for keeping the plate members contacting with each other, when the individual plate members are wound on the pulleys and spread in the sector shape so that they are inclined relative with each other. Generally, the rocking edges are made into linear portions, as called so. Alternatively, the rocking edges can also be replaced by a plurality of points.

At a predetermined position on one or two sides across the rocking edge, i.e., at a position outside the rocking edge, there is formed a projection which is made toward an adjoining plate member. This projection is a portion corresponding to a dimple 14 shown in Figs. 6A and 6B. The number of the projection need not be only one for each plate member but may be in plurality. Moreover, the shape of the projection need not be circular in section but may be arbitrary.

For this projection, there is formed a recess. This recess is a portion corresponding to a hole 15, as shown in Figs. 6A and 6B, for fitting the projection therein. Therefore, the recess is positioned on the side, as opposite to that of the projection, of each plate member. Moreover, the recess need not have a closed structure like the hole 15 but may be a through hole.

Therefore, these projection and recess act to be fitted on each other to position the adjoining plate members relatively. In this case, the relative positions between the plate members have a predetermined allowance so that the projection and the recess are constructed to be fitted with a predetermined gap (or clearance).

The rocking edge is positioned at a predetermined distance from a reference position determined in advance on each plate member. This reference position may be located to correspond to the saddle faces, on which the band-shaped member is wound, but should not be limited thereto. For example, the reference position may be the aforementioned transmissive faces for transmitting the torque between the pulleys or may be the projection or the recess. In case those transmissive faces, projections or recesses are positioned with reference to the portions corresponding to the saddle faces, however, the position of the rocking edge is determined after all with reference to the portion corresponding to the saddle faces.

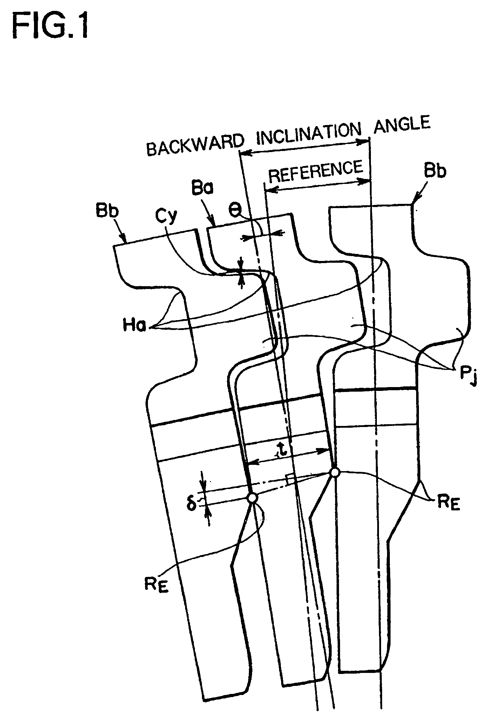

The positions of the rocking edges are ideally desired to be completely identical for the individual plate members but are inevitably dispersed for manufacturing technical reasons. Therefore, the positions of the rocking edges of the adjoining plate members may deviate from each other. In this case, the loads to push the plate members are dislocated This state is schematically shown in Fig. 1. In the shown example, two plate members Ba and Bb having a dislocation δ at positions of rocking edges RE are assembled adjacent to each other and are wound on the not-shown pulleys so that they are spread in the sector shape. If the plate member Ba is inclined by a predetermined angle θ from the normal position by the moment caused due to a dislocation of the rocking edge RE, the angle is found by:

$$\tan(\theta) = \delta/t.$$

Here, letter "t" indicates the thickness of the plate member Ba.

The plate member Ba is thus excessively inclined so that the fitting depth between the projection Pj and the recess Ha of the adjoining plate member Bb is deepened. With this fitting relation at the enlarged relative inclination angle, moreover, the clearance Cy between the outer face of the projection Pj and the inner face of the recess Ha (i.e., the clearance joining the rocking edge RE and the recess Ha or the projection Pj and taken in the Y-direction, that is, the farther clearance from the rocking edge RE) is reduced. Here, this clearance Cy can be set not only by adjusting the size in the Y-direction but also by adjusting the size of the contour of the projection or the inner size of the recess.

In this invention, the clearance Cy and the size difference (or the distance difference) δ (as will be tentatively expressed by a rocking edge distance difference δ) or its size ratio of the rocking edge RE of the adjoining plate member from the reference position are set in a predetermined relation. In this relation, more specifically, the clearance Cy is set to the larger value for the larger rocking edge distance difference δ or the size ratio.

Here, the rocking edge distance difference δ is a difference between the distance from the reference position to the rocking edge in the plate member pushing with the rocking edge and the distance from the reference position to the rocking edge in the pushed plate member, and takes positive value in case the latter size is smaller. Where the latter size is larger, therefore, the rocking edge distance difference δ takes a negative value. Moreover, the clearance Cy may take a negative value, when the outer face of the projection in the Y-direction contacts and positively meshes with the inner face of the recess. In this case, the plate member Bb having the projection is subjected to a compressive force for pushing it toward the pulleys, but the plate member Ba having the recess is subjected to a tensile force in the direction to pull it from the pulleys. The magnitude of this load is proportional to that (at the absolute value) of the negative value of the clearance Cy.

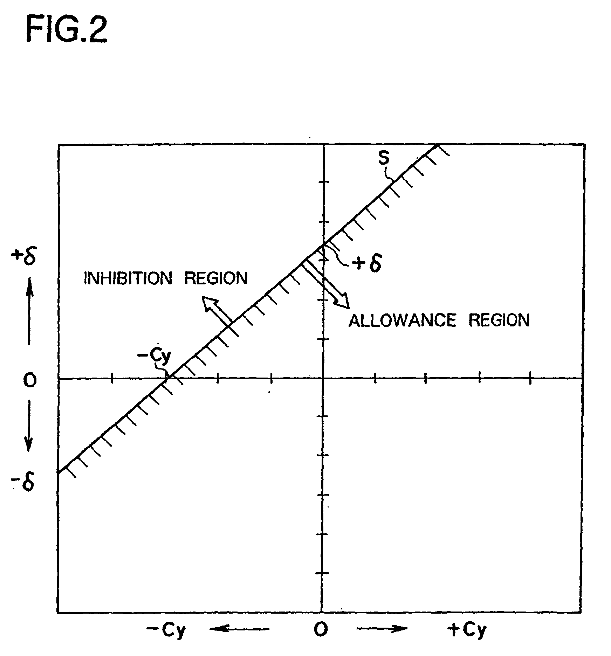

The relation in this invention between the rocking edge distance difference δ and the clearance Cy is illustrated by way of example in Fig. 2. Fig. 2 takes the rocking edge distance difference δ as its ordinate and the clearance Cy as its abscissa. The region, in which the rocking edge distance difference δ is larger or the clearance Cy is smaller across a straight line S, is an inhibition region, and the remaining region is an allowance region. In the inhibition region, the clearance Cy is smaller (or larger in the negative direction) than a predetermined negative value (-Cy) where the rocking edge distance difference δ is zero, and the rocking edge distance difference δ is larger than a predetermined value (+δ) where the clearance Cy is zero. In other words, the inhibition region is defined on the upper of the straight line S joining the point (-Cy) on the abscissa and the point (+δ) on the ordinate. In the drive belt of this invention, the individual plate members are so arrayed that the individual size relations of the adjoining plate members may not enter the inhibition region. Therefore, this straight line indicates such a threshold value of this invention as is set the larger as the clearance Cy becomes the larger.

The rocking edge distance difference δ and the clearance Cy in this invention are made so relative that their values may be confined in the aforementioned allowance region. Therefore, the plate members to adjoin each other may be arranged at the adjoining positions by determining their clearance Cy, by selecting the plate members to be the clearance Cy from a large population, by selecting the plate members having the rocking edge distance difference δ in the predetermined relation from the selected plate members, and by arranging the selected plate members at the adjoining positions. Alternatively, the plate members may be arranged at the adjoining positions by determining the rocking edge distance difference δ of the plate members to adjoin, on the contrary, by selecting the plate members having the rocking edge distance difference δ from a large population, by selecting the plate members having the clearance Cy in the predetermined relation from the selected plate members, and by arranging the selected plate members at the adjoining positions.

Moreover, the order of arraying the plate members may be determined by inputting data such as the sizes of the rocking edge of the numerous plate members from the reference position or the individual sizes of the projection and the recess as numerical data in a storage device, by processing the data by a data processing device such as a computer, and by selecting the plate members having the rocking edge distance difference δ and the clearance Cy in a predetermined relation. Any of these methods of this invention may be selected for arraying the plate members.

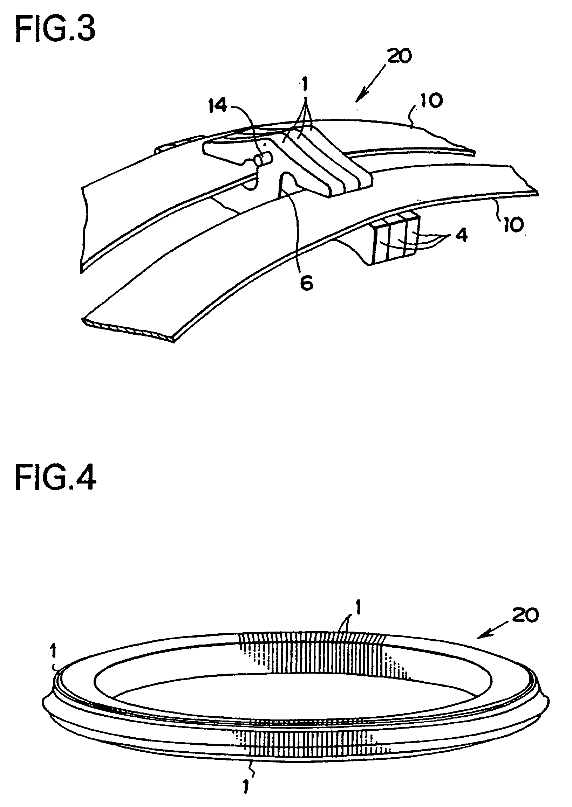

Here will be described an embodiment of this invention. It is, however, natural that this invention should not be limited to the embodiment to be described in the following. In Fig. 3, reference numeral 1 designates a number of V-shaped blocks corresponding to the plate members of this invention. These numerous V-shaped block 1 are arranged in an annular shape to confront each other in the thickness direction and are bound by threading hoops 10 of an annular metallic band-shaped member through their right and left saddle faces 11 and 12 thereby to construct an endless (annular) drive belt 20, as shown in its entirety in Fig. 4. This V-shaped block 1 has a shape similar to that which has been described with reference to Figs. 6A and 6B, so that its description is omitted by designating its components in Figs. 3 and 4 by the same reference numerals as those of Figs. 6A and 6B.

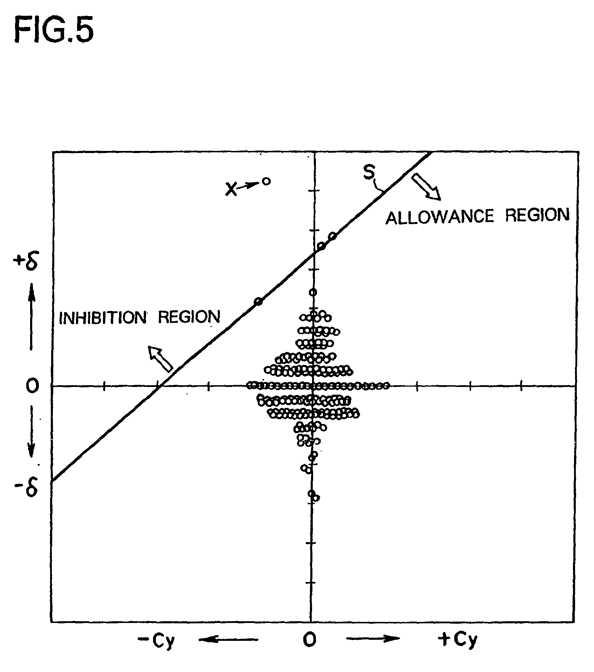

The aforementioned clearance Cy and rocking edge distance difference δ on the V-shaped blocks 1 constructing the drive belt 20 are measured, and their measured results are plotted in Fig. 5. The relations between the rocking edge distance difference δ and the clearance Cy in the drive belt 20 according to this invention are plotted as the regions defined by the straight line S in Fig. 5. Specifically, the lower region of the straight line S is the allowance region, and the upper region is the inhibition region.

First of all, in the assembled drive belt 20, there is mixedly present the V-shaped block, as designated by reference letter X in Fig. 5. This V-shaped block X belongs to the inhibition region, because the deviations of the V-shaped block X and the adjoining V-shaped blocks from the reference value of the clearance Cy are not especially large but because the rocking edge distance difference δ of the same is relatively large.

In the method of this invention, a V-shaped block is replaced by another in case the relation between the rocking edge distance difference δ and the clearance Cy deviate from the predetermined relation as in that V-shaped block X. Alternatively, the array positions are so changed to rearrange the V-shaped blocks that the rocking edge distance difference δ and the clearance Cy of the adjoining V-shaped blocks may take the predetermined relation.

The drive belt 20 thus obtained by this invention is kept away from any high bending moment that might otherwise be caused at the joint portion between the neck portion 6 and the body portion 2 by the interference between the dimple 14 and the hole 15, even in the case of a large rocking edge distance difference δ. As a result, the possibility of the fatigue failure at the joint portion can be avoided or eliminated to improve the durability of the drive belt 20. Moreover, the V-shaped blocks having a small rocking edge distance difference δ can reduce the clearance Cy between the dimple 14 and the hole 15 thereby to improve the positioning precision of the V-shaped blocks relatively.

Here will be synthetically described the advantages to be obtained by this invention. If the position of the rocking edge from the reference position is different between the adjoining plate members, according to the drive belt and the method for manufacturing the drive belt in accordance with this invention, the clearance between the projection and the recess is accordingly set. Even if the plate member may be inclined with respect to the adjoining plate member by the cause of the difference in the rocking edge positions, therefore, the projection and the recess in the adjoining plate members are prevented from contacting or meshing with each other to establish a high stress. Therefore, the drive belt is improved in its durability. In case no or little difference is between the positions of the rocking edges of the adjoining plate members, moreover, the clearance between the projection and the recess of the plate members can be reduced to improve the positioning precision of the plate members relatively. In other words, the stability of the shape of the drive belt is improved.

The rocking edge distance difference in a block composing a drive belt and the clearance in a Y-direction between a dimple and a hole are set in a predetermined relation. Even if the block is inclined by a moment to be caused according to the rocking edge distance difference, the interference between the dimple and the hole can be avoided or will not cause, if any, an especially high stress thereby to improve the durability of the drive belt. In the case of a small rocking edge distance difference, moreover, the clearance can be reduced to improve the relative positioning precision of the block.

## Claims

1. A drive belt, in which an annular band-shaped member (10) is wound on a multiplicity of plate members (1) to be arrayed in an annular shape to confront each other, to bind said plate members in an annular shape, in which there is formed on one side face of each plate member in the array direction a rocking edge (RE) to contact with a plate member to adjoin said each plate member when said each plate member comes into an arcuately curved array state, in which a projection (Pj) to project toward the adjoining plate member is formed on said each plate member at a predetermined position dislocated in the inner and outer circumferential direction of said band-shaped member with respect to said rocking edge, and in which a recess (Ha) to fit the projection of the adjoining plate member is formed on the face opposite to the face having said projection, **characterized:**

   **in that** the difference (δ) or ratio of the size of the rocking edge of each of the adjoining plate members from a predetermined reference position (11, 12) and a clearance (Cy), as taken in a direction to join said rocking edge and said projection or recess, between said projection and said recess of the adjoining plate members are set in a predetermined relation.

2. A method for manufacturing a drive belt, in which an annular band-shaped member (10) is wound on a multiplicity of plate members (1) to be arrayed in an annular shape to confront each other, to bind said plate members in an annular shape, in which there is formed on one side face of each plate member in the array direction a rocking edge (RE) to contact with a plate member to adjoin said each plate member when said each plate member comes into an arcuately curved array state, in which a projection (Pj) to project toward the adjoining plate member is formed on said each plate member at a predetermined position dislocated in the inner and outer circumferential direction of said band-shaped member with respect to said rocking edge, and in which a recess (Ha) to fit the projection of the adjoining plate member is formed on the face opposite to the face having said projection, **characterized:**

   **in that** the individual plate members are arrayed so that the difference (δ) or ratio of the size of the rocking edge of each of the adjoining plate members from a predetermined reference position (11, 12) and a clearance (Cy), as taken in a direction to join said rocking edge and said projection or recess, between said projection and said recess of the adjoining plate members may take a predetermined relation.

3. A drive belt of Claim 1 or a manufacture method of Claim 2, **characterized:**

    **in that** said reference position is located on the saddle face (11, 12) of each plate member for winding said band-shaped member.

4. A drive belt of Claim 1 or a manufacture method of Claim 2, **characterized:**

    **in that** said predetermined relation is made so that the value of said clearance may take the larger value when said size difference or ratio is the larger.

5. A drive belt of Claim 1 or a manufacture method of Claim 2, **characterized:**

    **in that** said predetermined relation is made so that the difference of said size from said clearance may not exceed a threshold value which is determined in advance to increase as the value of said clearance increases.

**Patentansprüche**

1. Ein Treibriemen, bei dem ein ringförmiges bandförmiges Element (10) um eine Vielzahl von Plattenelementen (1) geschlungen ist, die in einer ringförmigen Anordnung einander gegenüberliegend anzuordnen sind, um diese Plattenelemente in einer Ringform miteinander zu verbinden, wobei auf einer Seitenfläche jedes Plattenelements in der Richtung der Anordnung eine Kippkante (RE) geformt ist, um Kontakt mit einem Plattenelement zu haben, das an dieses Plattenelement angefügt ist, wenn dieses jeweilige Plattenelement in einen bogenartig gekrümmten Zustand der Anordnung gerät, wobei ein Vorsprung (Pj), der in Richtung des angefügten Plattenelements hervorsteht, an diesem jeweiligen Plattenelement an einer vorherbestimmten Position, die in der inneren und äußeren Umfangsrichtung dieses bandförmigen Elements in Bezug auf diese Kippkante verlagert ist, geformt ist, und wobei eine Vertiefung (Ha), die zu dem Vorsprung des angefügten Plattenelements passt, auf der Fläche gegenüber der Fläche geformt ist, welche den Vorsprung aufweist,
**dadurch gekennzeichnet, dass**
die Differenz (δ) oder das Verhältnis der Größe der Kippkante jedes der angefügten Plattenelemente von einer vorherbestimmten Referenzposition (11, 12) und ein Abstand (Cy), gemessen in einer Richtung, in der diese Kippkante und dieser Vorsprung oder diese Vertiefung zusammengefügt sind, zwischen diesem Vorsprung und dieser Vertiefung der angefügten Plattenelemente in ein vorherbestimmtes Verhältnis gesetzt werden.

2. Ein Verfahren zur Herstellung eines Treibriemens, bei dem ein ringförmiges bandförmiges Element (10) um eine Vielzahl von Plattenelementen (1) geschlungen ist, die in einer ringförmigen Anordnung einander gegenüberliegend anzuordnen sind, um diese Plattenelemente in einer Ringform miteinander zu verbinden, wobei auf einer Seitenfläche jedes Plattenelements in der Richtung der Anordnung eine Kippkante (RE) geformt ist, um Kontakt mit einem Plattenelement zu haben, das an dieses Plattenelement angefügt ist, wenn dieses jeweilige Plattenelement in einen bogenartig gekrümmten Zustand der Anordnung gerät, wobei ein Vorsprung (Pj), der in Richtung des angefügten Plattenelements hervorsteht, an diesem jeweiligen Plattenelement an einer vorherbestimmten Position, die in der inneren und äußeren Umfangsrichtung dieses bandförmigen Elements in Bezug auf diese Kippkante verlagert ist, geformt ist, und wobei eine Vertiefung (Ha), die zu dem Vorsprung des angefügten Plattenelements passt, auf der Fläche gegenüber der Fläche geformt ist, welche den Vorsprung aufweist,
**dadurch gekennzeichnet, dass**
die einzelnen Plattenelemente so angeordnet werden, dass die Differenz (δ) oder das Verhältnis der Größe der Kippkante jedes der angefügten Plattenelemente von einer vorherbestimmten Referenzposition (11, 12) und ein Abstand (Cy), gemessen in einer Richtung, in der diese Kippkante und dieser Vorsprung oder diese Vertiefung zusammengefügt sind, zwischen diesem Vorsprung und dieser Vertiefung der angefügten Plattenelemente ein vorherbestimmtes Verhältnis annehmen können.

3. Ein Treibriemen gemäß Anspruch 1 oder ein Herstellungsverfahren gemäß Anspruch 2,
**dadurch gekennzeichnet, dass**
diese Referenzposition auf der Sattelfläche (11, 12) jedes Plattenelements zum Umschlingen dieses bandförmigen Elements positioniert ist.

4. Ein Treibriemen gemäß Anspruch 1 oder ein Herstellungsverfahren gemäß Anspruch 2,
**dadurch gekennzeichnet, dass**
dieses vorherbestimmte Verhältnis so gestaltet wird, dass der Wert dieses Abstands den größeren Wert annehmen kann, wenn diese Größendifferenz oder dieses Verhältnis ein größeres ist.

**5.** Ein Treibriemen gemäß Anspruch 1 oder ein Herstellungsverfahren gemäß Anspruch 2, **dadurch gekennzeichnet, dass** dieses vorherbestimmte Verhältnis so gestaltet wird, dass die Differenz dieser Größe von diesem Abstand einen Grenzwert nicht übersteigen kann, der im Voraus so festgelegt wird, dass er zunimmt, wenn der Wert dieses Abstands zunimmt.

**Revendications**

**1.** Courroie d'entraînement dans laquelle un élément en forme de bande (10) est enroulé sur une multiplicité d'éléments plats (1) devant être rangés en aneau de façon à se faire mutuellement face, afin de lier lesdits éléments plats sous une forme en anneau, dans laquelle il est formé sur une face latérale de chaque élément plat, dans le sens de rangement, une arête de basculement (RE) destinée à venir en contact avec un élément plat adjacent à l'élément plat concerné lorsque ledit élément plat concerné vient dans un état de rangement courbé à la manière d'un arc, dans laquelle une saillie est formée sur chaque élément plat à un emplacement prédéterminé déporté dans la direction circonférentielle intérieure et extérieure dudit élément en forme de bande par rapport à ladite arête de basculement, et dans laquelle un évidemment (Ha) destiné à recevoir la saillie de l'élément plat adjacent est formé dans la face opposée à la face portant la saillie, **caractérisé en ce que** :

la différence (δ) ou le rapport de taille de l'arête de basculement de chacun des éléments plats adjacents à partir d'une position de référence prédéterminée (11, 12) et un jeu (Cy), considéré dans une direction reliant ladite arête de basculement et ladite saillie ou ledit évidemment, entre ladite saillie et ledit évidemment des éléments plats adjacents sont établis dans une relation prédéterminée.

**2.** Procédé pour fabriquer une courroie d'entraînement dans laquelle un élément en forme de bande (10) est enroulé sur une multiplicité d'éléments plats (1) devant être rangés en aneau de façon à se faire mutuellement face, afin de lier lesdits éléments plats sous une forme en anneau, dans laquelle il est formé sur une face latérale de chaque élément plat, dans le sens de rangement, une arête de basculement (RE) destinée à venir en contact avec un élément plat adjacent à l'élément plat concerné lorsque ledit élément plat concerné vient dans un état de rangement courbé à la manière d'un arc, dans laquelle une saillie est formée sur chaque élément plat à un emplacement prédéterminé déporté dans la direction circonférentielle intérieure et extérieure dudit élément en forme de bande par rapport à ladite arête de basculement, et dans laquelle un évidemment (Ha) destiné à recevoir la saillie de l'élément plat adjacent est formé dans la face opposée à la face portant la saillie, **caractérisé en ce que** :

les éléments plats individuels sont rangés de telle sorte que la différence (δ) ou le rapport de taille de l'arête de basculement de chacun des éléments plats adjacents à partir d'une position de référence prédéterminée (11, 12) et un jeu (Cy), considéré dans une direction reliant ladite arête de basculement et ladite saillie ou ledit évidemment, entre ladite saillie et ledit évidemment des éléments plats adjacents peuvent prendre une relation prédéterminée.

**3.** Courroie d'entraînement selon la revendication 1 ou procédé de fabrication selon la revendication 2, **caractérisé en ce que** :

ladite position de référence est située sur la face d'appui (11, 12) de chaque élément plat sur laquelle l'élément en forme de bande est destiné à être enroulé.

**4.** Courroie d'entraînement selon la revendication 1 ou procédé de fabrication selon la revendication 2, **caractérisé en ce que** :

ladite relation prédéterminée est faite de telle sorte que la valeur dudit jeu puisse prendre la plus grande valeur lorsque ladite différence ou rapport de taille est le plus grand.

**5.** Courroie d'entraînement selon la revendication 1 ou procédé de fabrication selon la revendication 2, **caractérisé en ce que** :

ladite relation prédéterminée est faite de telle sorte que la différence de ladite taille à partir dudit jeu ne puisse pas excéder une valeur de seuil qui est déterminée par avance pour augmenter à mesure que la valeur dudit jeu augmente.

# FIG.1

# FIG.2

FIG.3

FIG.4

# FIG.5

EP 1 236 928 B1

FIG.6A

FIG.6B

14

FIG.7

# FIG.8

# FIG.9